# EUROPEAN PATENT APPLICATION

(11) **EP 1 777 269 A1**
(43) Date of publication of application: **25.04.2007**
(21) Application number: 05022697.6
(22) Date of filing: 18.10.2005
(51) Int. Cl.: C09D 4/00, C08F 22/10

(54) **Curable composition and acryloyl group containing curable oligomer and process for producing the acryloyl group containing curable oligomer**

(71) Applicant: DAINIPPON INK AND CHEMICALS, INC., Itabashi-ku Tokyo (JP)
(72) Inventor: Gaudl, Kai-Uwe, Dr., 13403 Berlin (DE); Lachowicz, Artur, Dr., 13403 Berlin (DE); Kutzner, Fabian, Dr., 13403 Berlin (DE)
(74) Representative: Albrecht, Thomas

(57) **Abstract**

The invention relates to a curable composition comprising an acryloyl group containing curable oligomer which is obtained by an addition reaction of a polyfunctional acryloyl compound with a polyfunctional aliphatic mercaptane compound, and a photoinitiator which is useful for UV-coatings.

## Description

### FIELD OF THE INVENTION

This invention relates to a curable composition and an acryloyl group containing curable oligomer which is usable for UV-coatings and a process for producing the acryloyl group containing curable oligomer.

### DESCRIPTION OF THE RELATED ART

Curable acrylic acid esters, especially radiation curable acrylic acid ester (acrylates) are widely used in coating industry. Their use is increasing because they are solvent free and therefore environment friendly coating systems. Furthermore, the instant curing by radiation such as ultraviolet light, provides much higher productivity compared to thermal cured resins.

Ultraviolet curable systems based on acrylates contain an initiating species, a photo initiator, which forms radicals. These radicals react with the acrylic double bond of the acrylate monomers and start a polymerisation process.

However, oxygen, which is present almost everywhere, represents a di-radial itself and is able to react with the formed photoinitiator radical or monomer radical or the radical on the growing polymer chain. In this way, the polymerisation process is retarded or stopped. This is especially troublesome at the coating surface where more oxygen is present than dissolved in the coating material itself. This effect is known to a person skilled in the art and called "oxygen inhibition". It is characterized in that the surface after curing becomes wet or greasy, although the bulk of the coating is sufficiently cured.

Typical methods, which are applied in industry production process to overcome the problem of the oxygen inhibition, are the use of more light bulbs for radiation curing or more photoinitiator or to cure in the absence of oxygen under inert atmosphere. Apart from the fact that these process methods are costly, they do not really solve the problem of the materials, as the oxygen sensitivity of the coating system still remains.

On the other hand, as another approach to overcome the problem, for example, "Journal of Polymer Seience; Part A: Polymer Chemistry, vol.42,5301-5338(2004)" discloses a radiation curable composition comprising unsaturated compounds with polyfunctional thiols.

However the curable compositions are generally storage unstable and cannot be stored or delivered as a one component system.

### SUMMARY OF THE INVENTION

The object of the present invention is to provide a curable composition comprising acryloyl group containing oligomers and a photoinitiator, which shows excellent surface cure and excellent storage stability.

Unexpectedly, it was found that the radiation curable compositions and oligomers of this invention are curable even with very low amounts of photoinitiator.

Accordingly, the present invention provides, a curable composition comprising
a) an acryloyl group containing curable oligomer which is obtained by an addition reaction of
   i) a polyfunctional acryloyl compound with
   ii) a polyfunctional aliphatic mercaptane compound,
   and
b) a photoinitiator.

Moreover, the present invention also provides an acryloyl group containing curable oligomer
characterized in having a chemical structure which is obtained by an addition reaction of
i) a polyfunctional acryloyl compound represented the following formula (1), 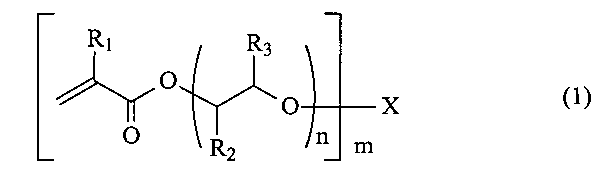 wherein X denotes a mono- to hexavalent aliphatic hydrocarbon group, a mono- to hexavalent cycloaliphatic hydrocarbon group, a mono- to hexavalent aromatic structure containing hydrocarbon group, optionally comprising one or more heteroatoms selected from the group consisting of a nitrogen atom, an oxygen atom and a sulfur atom, or a mono- to hexavalent heterocyclic hydrocarbon group containing a nitrogen atom, oxygen atom or sulfur atom as the heteroatom,
   R1, R2 and R3 denotes a hydrogen atom or a methyl group independently, n means an integer of 0 to 8, m means an integer of 1 to 6, with
ii) the polyfunctional aliphatic mercaptane compound represented by the following formula (2), 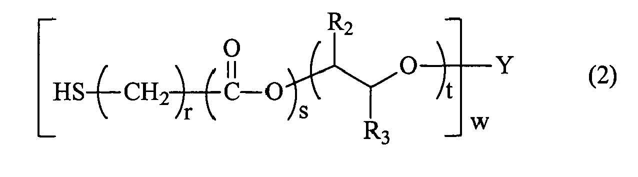
wherein Y denotes a mono- to tetra-valent aliphatic or cycloaliphatic group, R2 and R3 independently denotes a hydrogen atom or a methyl group, r means an integer of 0 to 2, s means an integer of 0 or 1, t means an integer of 0 to 8, w means an integer of 1 to 4, provided that r means 1 or 2 if s=1, and also having a molecular weight (Mw) of from 800 to 5,000.

According to the present invention, excellent surface cure and excellent storage stability of a radiation curable composition can be obtained.

### DETAILED DESCRIPTION OF THE PREFERRED EMBODIMENTS

The curable composition of the present invention is characterized in having thioether group in the chemical structure of the curable oligomer, which is prepared by the reaction of multifunctional acrylates with multifunctional thiols, thereby the composition of the present can overcome the problem of oxygen inhibition and can improve storage stability significantly. Furthermore, the curable composition of the present invention can be hardened to solvent resistant coatings and masses even in the case of using an unexpectedly low amount of photo initiator. Examples of the polyfunctional acryloyl compound i) include multifunctional acrylates represented by the following general formula (1), 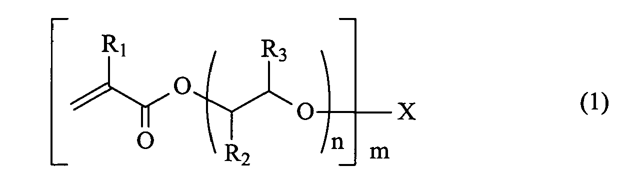 wherein X denotes a mono- to hexavalent aliphatic hydrocarbon group, a mono- to hexavalent cycloaliphatic hydrocarbon group, a mono- to hexavalent aromatic structure containing hydrocarbon group, optionally comprising one or more heteroatoms selected from the group consisting of a nitrogen atom, an oxygen atom and a sulfur atom, or a mono- to hexavalent heterocyclic hydrocarbon group containing a nitrogen atom, oxygen atom or sulfur atom as the heteroatom,
R1, R2 and R3 denotes a hydrogen atom or a methyl group independently, n means an integer of 0 to 8, m means an integer of 1 to 6.

The term "aliphatic hydrocarbon group" denotes straight or branched hydrocarbon chain comprising 1 to 36 carbon atoms.

The term "cycloaliphatic hydrocarbon group" denotes a cyclic aliphatic structure comprising 3 to 36 carbon atoms.

The term "aromatic structure containing hydrocarbon group" denotes a hydrocarbon group as defined above comprising an aromatic structure derived from aromatic hydrocarbons comprising 4n+2-π-electrones.

The term "heterocyclic hydrocarbon group" denotes a cyclic C3-C36 hydrocarbon group wherein one or more carbon atoms can be replaced with heteroatoms selected from the group consisting of a nitrogen atom, oxygen atom and sulfur atom.

Preferred multifunctional acrylates of the formula (1) include ethylene glycol diacrylate, 1,4-butandiol diacrylate, 1,6-hexandiol diacrylate, dipropylene glycol diacrylate, neopentylglycol diacrylate, ethoxylated neopentylglycol diacrylates, propoxylated neopentylglycol diacrylates, tripropylene glycol diacrylate, bisphenol-A diacrylate, ethoxylated bisphenol-A-diacrylates, bisphenol-A-diglycidylether diacrylate, ethoxylated bisphenol-A-diacrylates, poly(ethylene)glycol diacrylates, trimethylolpropane triacrylate, trimethylolpropane trimethacrylate, ethoxylated trimethylolpropane triacrylates, propoxylated trimethylolpropane triacrylates, propoxylated glycerol triacrylates, pentaerythritol triacrylate, ethoxylated pentaerythritol triacrylates, pentaerythritol tetraacrylate, ethoxylated pentaerythritol tetraacrylates, ditrimethylolpropane tetraacrylate, dipentaerythritol pentaacrylate, dipentaerythritol hexaacrylate or mixtures thereof.

Next, examples of the polyfunctional aliphatic mercaptane compound ii) include multifunctional thiol compounds represented by the general formula(2), 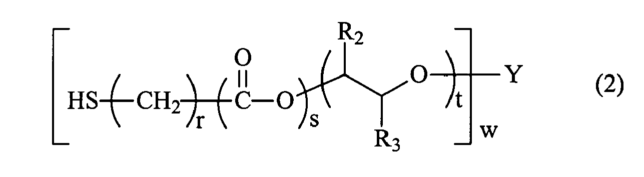 wherein Y denotes a mono- to tetra-valent aliphatic or cycloaliphatic group, R2 and R3 independently denotes a hydrogen atom or a methyl group, r means an integer of 0 to 2, s means an integer of 0 or 1, t means an integer of 0 to 8, w means an integer of 1 to 4, provided that r means 1 or 2 if s=1.
Preferred multifunctional thiols of the formula (2) include ethanedithiol, butanedithiol, pentanedithiol, hexanedithiol, dodecanedithiol, 1,2,3-trimercaptopropane, ethylene glycol di(3-mercaptopropionate), polyethylene glycol di(2-mercaptopropionates). ethylene glycol di(2-mercaptoacetate) trimethylolethane tris(3-mercaptopropionate), trimethylolpropane tris(3-mercaptopropionate), ethoxylated trimethylolpropane tris(3-mercaptopropionates), trimethylolpropane tris(2-mercaptoacetate), ethoxylated trimethylolpropane tris(2-mercaptoacetates), pentaerythritol tetrakis(3-mercaptopropionate), ethoxylated pentaerythritol tetrakis(3-mercaptopropionates), pentaerythritol tetrakis(2-mercaptoacetate), ethoxylated pentaerythritol tetrakis(2-mercaptoacetates) or mixtures thereof.

As mentioned above, the curable oligomer used in the present invention can be obtained by a reaction of the polyfunctional acryloyl compound with the polyfunctional aliphatic mercaptane. The reaction can be carried out by the following process. That is, the polyfunctional acryloyl compound is mixed with the polyfunctional aliphatic mercaptane compound and stirred at 0-150°C, preferably at 25-80°C. Optionally, a basic catalyst may be used to accelerate the reaction. Suitable catalysts include: triethylamine, diethanolamine, hexylamine, dodecylamine, hexanediamine benzyltriethylammonium hydroxide, tetrabutylammonium hydroxide, piperidine, 2-hydroxypyridine, diazabicyclooctane, diazabicyclononene, diazabicycloundecene and tetramethylguanidine, inorganic bases such as for example sodium carbonate, potassium carbonate, calcium carbonate, calcium hydroxide, sodium hydroxide, potassium hydroxide, organic metal salts based on alcohols and phenols such as for example sodium methylate, potassium methylate, sodium ethylate, potassium ethylate, magnesium ethanolate, sodium tert.-butylate, potassium tert.-butylate, sodium phenolate and potassium phenolate.
Especially preferred are secondary amines, including diethanolamine, dibutylamine, dipentylamine, dihexylamine, N-methyl isopropylamine, N-methyl butylamine, Bis(2-ethylhexylamine), N,N-diethylenediamine, N,N-diisoproylethylenediamine. Such amines react also with the acryloyl group during the formation of the oligomer of this invention. Thus, the catalyst is chemically fixed to the oligomer by Michael addition yielding curable products having no free catalyst. This is especially useful for example for curable oligomers for food packaging where no small extractable compounds, such as catalysts, are allowed. The amount of catalyst is 0.1-5.0 weight% on the total weight of the reaction mixture, preferred are 0.3-1.0 weight%.

It is important to use an excess of the polyfunctional acryloyl compound i). In general the excess of equivalents of acryloyl groups of the polyfunctional acryloyl compound i) versus the equivalents of the thiol groups of the polyfunctional aliphatic mercaptane compound ii) is in the range of 1.05:1 to 10:1. Further, the amount of excess of equivalents of acryloyl groups of the polyfunctional acryloyl compound i) versus the equivalents of the thiol groups of the polyfunctional aliphatic mercaptane compound ii) depends on their functionality. As a general rule, the higher the functionality of both the polyfunctional acryloyl compound i) and the polyfunctional aliphatic mercaptane compound ii), the higher the excess of the acryloyl group equivalent must be in order to avoid gelation. In the special case of the reaction of difunctional acrylates with difunctional thiols, the excess of acrylate equivalents is not critical, as gelation is not possible. The preferable equivalent ratio of acryloyl group and thiol group can be selected arbitrarily depends on target product viscosity and target product molecular weight.

The endpoint of the reaction is achieved, if the viscosity, which increases during the preparation, becomes stable. Then, all of the thiol groups have reacted and increase of the molecular weight stops as well as the increase of viscosity. Alternatively, the content of thiols groups may be monitored by Infrared spectroscopy or titration of the thiol groups.

Thus obtained curable oligomer is liquid or paste-like, colorless to faint yellow and has a weight-average molecular weight (Mw) within the range of 400-30,000, preferred 800-5,000 and soluble in the most common solvents. Furthermore, the preferable range of the viscosity of the oligomer is from 5,000 to 60,000 mPas at 25°C, which is measured with a cone and plate viscosimeter at a shear rate of 1250 1/s, from the viewpoint of handling as coating.

Furthermore, in the present invention, the acryloyl group containing curable oligomer preferably has a functionality of acryloyl groups of 4 to 20 from the viewpoint of said surface curability as a curable composition and solvent resistance of its cured product.

A concrete chemical structure of the oligomer includes all of the structures which are derived from the polyfunctional acryloyl compound i) and the polyfunctional aliphatic mercaptane compound ii).

However, for example, in the case of using a lower molecular weight oligomer as a oligomer, the chemical structure represented by the following formula is preferable.

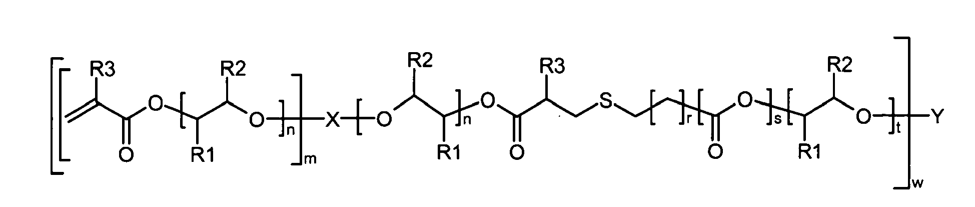

Here, in this formula, X denotes a mono- to hexavalent aliphatic hydrocarbon group, a mono- to hexavalent cycloaliphatic hydrocarbon group, a mono- to hexavalent aromatic structure containing a hydrocarbon group, or mono- to hexavalent heterocyclic hydrocarbon group containing a nitrogen atom, an oxygen atom or a sulfur atom as the heteroatom, Y denotes a mono- to tetra-valent aliphatic or cycloaliphatic group
R1, R2 and R3 denotes a hydrogen atom or a methyl group independently,
n means an integer of 0 to 8,
m means an integer of 1 to 6,
r means an integer of 0 to 2,
s means an integer of 0 or 1,
t means an integer of 0 to 8,
w means an integer of 1 to 4, provided that r means 1 or 2 if s=1.
For example, an oligomer which is obtained by the reaction of 5 molecules trimethylolpropane triacrylate with 2 molecules of trimethylolpropane tris(3-mercaptopropionate) can be illustrated as follows: 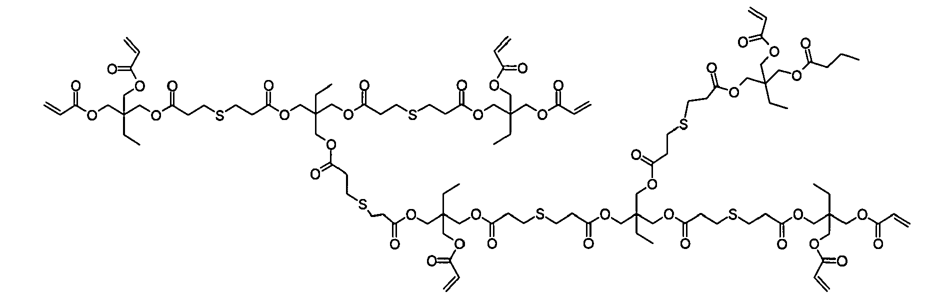 Next, an oligomer which is obtained by the reaction of 4 molecules ethoxylated trimethylol-propane triacrylate with 1 molecule of pentaerythritol tetrakis(3-mercaptopropionate) can be illustrated as follows:

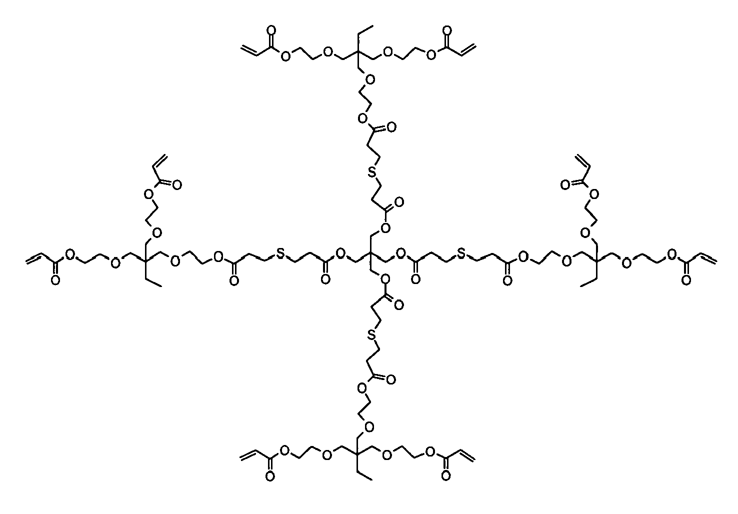

The curable composition of the invention may comprise the above-mentioned resin alone or may further comprise other photocurable monomers or resins in combination.

Examples of the photocurable monomers include dipropylene glycol diacrylate, trimethyrolpropane-triacrylate, and pentaerythritol tetraacrylate.

Examples of the other photocurable resins include acrylated epoxy resins, acrylated polyurethanes, and acrylated polyesters.

In the present invention, the acryloyl group containing oligomer of the present invention, as well as the curable composition thereof, including a photo initiator, can exhibit exceptional storage stability.

Next, the foregoing photoinitiator used in the present invention is not specifically limited, and conventional photoinitiators which are state of the art and are commercially available can be used.

Accordingly, suitable photoinitiators include benzophenones, benzilketales, dialkoxy acetophenones, hydroxyalkylacetophenones, aminoalkylphenones, acylphosphinoxides and thioxanthones, for example benzophenone, methylbenzophenone, 4-phenylbenzophenone, 4,4'-bis(dimethylamino)-benzophenone, 4,4'-bis(diethylamino)-benzophenone, 2,2-dimethoxy-2-phenylacetophenone, dimethoxyacetophenone, diethoxyacetophenone, 2-hydroxy-2-methyl-1-phenylpropan-1-one, 2-benzyl-2-dimethylamino-1-(4-morpholinophenyl)-butan-1-one, 2-methyl-1-[4(methoxythio)-phenyl]-2-morpholinopropan-2-one, diphenylacylphenyl phosphinoxide, diphenyl(2,4,6-trimethylbenzoyl) phosphinoxide, 2,4,6-trimethylbenzoylethoxyphenyl phosphinoxide, 2-isopropylthioxantone, 4-isopropylthioxanthone, 2,4-dimethylthioxanthone.

The amount of added photoinitiator may be selected from the range of 0.5 to 12% by weight, in particular, the range of from 2 to 7% by weight is preferable.

The curable composition of this invention may be prepared by dissolving the photoinitiator in the oligomers of this invention. In this case, if required, the curable composition can be diluted with additional conventional acrylate oligomers, photocurable monomers or photocurable resins until the desired application viscosity is reached.

In the present invention, the acryloyl group containing curable oligomer of the present invention can be cured not only with ultraviolet- (UV)-light, but also with electron beam.

Regarding electron beam curing, the materials of this invention can be cured with a low dose of energy due to their high reactivity. Good curing results were obtained with electrons having a low energy of 100 KeV. This is important for energy curable products in packaging industry, where electron beam curing is widely used, because the use of high energy electrons may lead to side reactions producing unwanted materials, which may contaminate the packaging materials.

However, among them, a preferred curing method is the crosslinking by UV radiation.

Furthermore, an unexpected feature of the oligomers of this invention is the excellent bulk cure. It was not anticipated that, unlike on the surface, in the bulk of the coating, where only very little oxygen is present, the oligomer or the curable compositions of the present invention shows much better curing results than a standard coating system.

The UV-curing of the oligomers of this invention in the presence of photoinitiators gives hard and colorless products, which are useful as coatings, or as a binder in paints and printing inks. Furthermore, the incorporation of thioethers enables the use of the curable composition and the oligomer of the present invention also in such applications where the thioether imparts additional properties, well-known in the art, such as high refractive index or flexibility.

### Examples

Objects and advantages of this invention are further illustrated by the following examples, but the particular materials and amounts thereof recited in these examples, as well as other conditions and details should not be construed to limit this invention.

### Example 1

A 500 cc. four-neck-flask, equipped with thermometer, mechanical stirrer, reflux-condenser and dropping funnel, was charged with 300.0g (0.70 mole) of ethoxylated (1EO/OH)trimethylolpropane triacrylate and 3.0g of diethanolamine. The mixture was heated to 40°C and 56.0g (0.115 mole) of pentaerythritol tetrakis(3-mercapto-propionate)was fed at a rate of 43ml/hour. After the addition of the thiol, the temperature was increased to 60°C and maintained for 12 hours. A resin having a Gardner color of 1 and a viscosity of 9800 mPas @ 25°C (measured with a cone and plate viscosimeter at a shear rate of 1250 1/s) was obtained.
Yield: 352.6g

### Example 2

A 500 cc. four-neck-flask, equipped with thermometer, mechanical stirrer, reflux-condenser and dropping funnel, was charged with 140.0g (0.32 mole) of ethoxylated (1EO/OH)trimethylolpropane triacrylate and 1.5g of diethanolamine. The mixture was heated to 40°C and 28.0g (0.057 mole) of pentaerythritol tetrakis(3-mercaptopropionate)was fed at a rate of 30ml/hour. After the addition of the thiol, the temperature was increased to 60°C and maintained for 12 hours. A resin having a Gardner color of 1-2 and a viscosity of 16500 mPas @ 25°C (measured with cone and plate viscosimeter at a shear rate of 1250 1/s) was obtained.
Yield: 167.2g

### Example 3

A 250 cc. four-neck-flask, equipped with thermometer, gas-inletting tube, mechanical stirrer and dropping funnel, was charged with 118.3g (0.40 mole) of trimethylolpropane triacrylate and 1.5g of diethanolamine. The mixture was purged with air and heated to 40°C and 38.9g (0.10 mole) of trimethylolpropane tris(3-mercaptopropionate) was fed at a rate of 60ml/hour. During feeding, an exothermic reaction took place during which the temperature increased to 80°C. Then, after the exothermic reaction has subsided, the temperature was maintained for 12 hours at 60°C. A resin, having a Gardner color of 2 and a viscosity of 47000 mPas @ 25°C was obtained. Yield: 158.8g

### Example 4 and Comparative example 1,2 <Storage stability test>

Storage stability test was carried out under the following conditions listed in table 1.

**Table 1: Stability of curable compositions:**

| | Example 4 | Comparative Example 1 | Comparative Example 2 |
|---|---|---|---|
| | Resin prepared according to example 1 | Di-trimethylol-propane tetraacrylate* | Thiol-ene crosslinking system** |
| Photo initiator | 2 weight % Darocur 1173 | 2 weight % Darocur 1173 | 2 weight % Darocur 1173 |
| Starting Viscosity @25°C | 9800mPas | 600mPas | 300mPas |
| Viscosity after 1 week @60°C | 10100 | 720 | gelled after 2 hours |
| Percent of viscosity increase | 3.0% | 20.0% | Indefinite |

| | | | |
|---|---|---|---|
| * purchased from Aldrich company ** based on ethoxylated (1EO/OH)trimetylolpropane triacrylate and pentaerythritol tetrakis(3-mercaptopropionate), equivalent ratio of acrylate groups and thiol groups = 1:1. | | | |

In comparison with conventional curable compositions based on thiols and acrylate compounds, the oligomers and curable compositions of this invention show much better storage stability in an accelerated storage stability test at 60°C.

Even in comparison with the commercially available multifunctional acrylate (Comparative example 1), the curable composition of example 4 showed less viscosity increase and therefore better storage stability.

### Example 5 and Comparative example 3 <Surface curability test>

Surface curability test was carried out under the following conditions listed in table 1.

**Table 2: Surface cure. Curing conditions: Fusion H-bulb, 120 W/cm, irradiation dose: 0.05 J/cm², coating thickness: ~50 µm.**

| | Example5 | Comparative Example3 |
|---|---|---|
| | **Coating containing oligomer of example. 1 | Standard acrylate coating composition*** |
| Viscosity @ 25°C | 450 mPas | 350 mPas |
| Amount of photo initiator required for tack-free surface* | 3 weight% Darocur 1173 | 4 weight % Darocur 1173 |

| | | |
|---|---|---|
| * tack-free surface is characterized in that no finger-print was left on the surface after thumb twist test. ** product of example 1 was dissolved in 50 % ethoxylated (1EO/OH) trimetylolpropane triacrylate. *** standard coating composition consists of 30% ethoxylated (1EO/OH) trimetylolpropane triacrylate, 35% bisphenol-A-diglycidyl ether diacrylate and 35 % tripropylene glycol diacrylate. | | |

In table 2, the composition of the present invention was compared with a standard coating composition, which is widely used in UV-curing technology. Table 2 shows that less amount of photoinitiator was required to achieve complete surface cure with the oligomers and the curable composition of the example 5, compared to a standard coating (Comparative Example 3).

### Example 6 and Comparative example 4 <Solvent resistance test>

Solvent resistance test was carried out under the following conditions listed in table 1.

**Table 3: Extent of crosslinking in dependence of the amount of photo initiator. Curing conditions: Fusion H-bulb, 120 W/cm, irradiation dose: 0.05 J/cm², coating thickness: ~50 µm.**

| | | Viscosity mPas @ 25°C | Amount of added photo initiator Darocur 1173 | *MEK rubbing test |
|---|---|---|---|---|
| Example 6 | **Resin prepared accordin g to example 1 | 450 | 0.10 weight% | 3 |
| | | | 0.25 weight% | 65 |
| | | | 0.50 weight% | >100 |
| | | | 0.75 weight% | >100 |
| | | | 1.00 weight% | >100 |
| | | | 2.00 weight% | >100 |
| Comparativ example 4 | ***Stand ard acrylate coating composit ion | 350 | 0.10 weight% | 3 |
| | | | 0.25 weight% | 3 |
| | | | 0.50 weight% | 5 |
| | | | 0.75 weight% | 20 |
| | | | 1.00 weight% | 90 |
| | | | 2.00 weight% | >100 |

| | | | | |
|---|---|---|---|---|
| * MEK rubbing test: Solvent resistance of the cured coating, measured by repeated rubbing (double rubs) with a cotton cloth soaked in methylethyl ketone (MEK). The number of double rubs is counted at which the coating showed severe damage or is dissolved. ** dissolved in 50 % ethoxylated (1EO/OH) trimetylolpropane triacrylate. *** standard coating composition consists of 30% ethoxylated (1EO/OH) trimetylolpropane triacrylate, 35% bisphenol-A-diglycidyl ether diacrylate and 35 % tripropylene glycol diacrylate. | | | | |

Table 3 showed the crosslinking of the curable compositions of this invention compared to a standard coating system. The extent of cure was tested by solvent resistance with methyl ethyl ketone (MEK).

As clearly indicated by the measurement results of table 3, with the same amount of photoinitiator, the extent of crosslinked solvent resistant material was higher with the curable composition of the example 6 compared to the standard coating composition.

## Claims

1. A curable composition comprising
a) an acryloyl group containing curable oligomer which is obtained by an addition reaction of
i) a polyfunctional acryloyl compound with
ii) a polyfunctional aliphatic mercaptane compound,
and
b) a photoinitiator.

2. A curable composition according to claim 1, wherein the polyfunctional acryloyl compound i) is represented by the following formula (1), 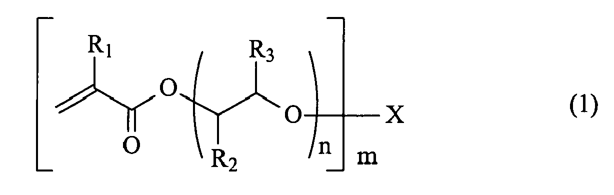 wherein X denotes a mono- to hexavalent aliphatic hydrocarbon group, a mono- to hexavalent cycloaliphatic hydrocarbon group, a mono- to hexavalent aromatic structure containing hydrocarbon group, optionally comprising one or more heteroatoms selected from the group consisting of a nitrogen atom, an oxygen atom and a sulfur atom, or a mono- to hexavalent heterocyclic hydrocarbon group containing a nitrogen atom, oxygen atom or sulfur atom as the heteroatom, R1, R2 and R3 denotes a hydrogen atom or a methyl group independently, n means an integer of 0 to 8, m means an integer of 1 to 6, and the polyfunctional aliphatic mercaptane compound ii) is represented by the following formula (2), 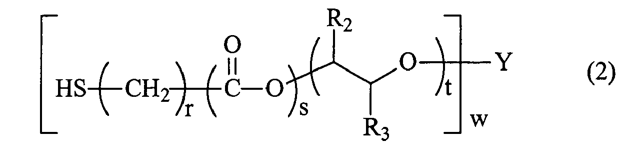 wherein Y denotes a mono- to tetra-valent aliphatic or cycloaliphatic group, R2 and R3 independently denotes a hydrogen atom or a methyl group, r means an integer of 0 to 2, s means an integer of 0 or 1, t means an integer of 0 to 8, w means an integer of 1 to 4, provided that r means 1 or 2 if s=1.

3. A curable composition according to claim 1 or 2, wherein the acryloyl group containing curable oligomer has a molecular weight (Mw) of from 400 to 30,000.

4. A curable composition according to claim 3, wherein the acryloyl group containing curable oligomer has functionality of acryloyl groups of 4 to 20.

5. An acryloyl group containing curable oligomer **characterized in** having a chemical structure which is obtained by an addition reaction of
i) a polyfunctional acryloyl compound represented the following formula (1), 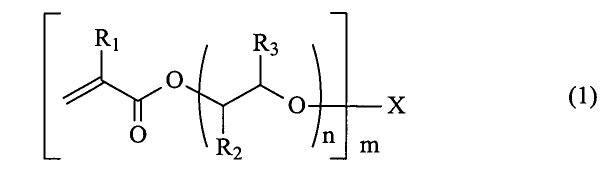 wherein X denotes a mono- to hexavalent aliphatic hydrocarbon group, a mono- to hexavalent cycloaliphatic hydrocarbon group, a mono- to hexavalent aromatic structure containing hydrocarbon group, optionally comprising one or more heteroatoms selected from the group consisting of a nitrogen atom, an oxygen atom and a sulfur atom, or a mono- to hexavalent heterocyclic hydrocarbon group containing a nitrogen atom, oxygen atom or sulfur atom as the heteroatom,
R1, R2 and R3 denotes a hydrogen atom or a methyl group independently, n means an integer of 0 to 8, m means an integer of 1 to 6,
with
ii) the polyfunctional aliphatic mercaptane compound represented by the following formula (2), 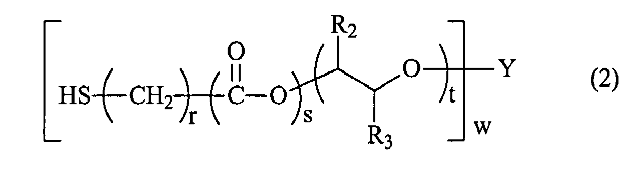
wherein Y denotes a mono- to tetra-valent aliphatic or cycloaliphatic group, R2 and R3 independently denotes a hydrogen atom or a methyl group, r means an integer of 0 to 2, s means an integer of 0 or 1, t means an integer of 0 to 8, w means an integer of 1 to 4, provided that r means 1 or 2 if s=1, and having a molecular weight (Mw) of from 800 to 5,000.

6. An acryloyl group containing curable oligomer according to claim 5, wherein the acryloyl group containing curable oligomer has functionality of acryloyl groups of 4 to 20.

7. A process for producing an acryloyl group containing curable oligomer comprising, reacting
i) a polyfunctional acryloyl compound with
ii) a polyfunctional aliphatic mercaptane compound.

8. A process for producing an acryloyl group containing curable oligomer according to claim 7, wherein the polyfunctional acryloyl compound i) is represented by the following formula (1), 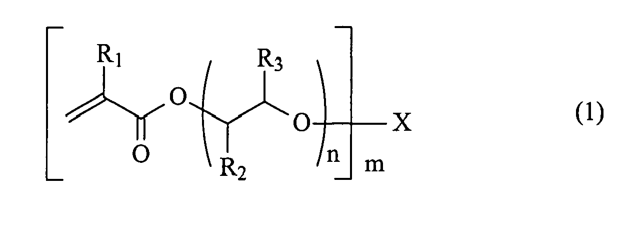 wherein X denotes a mono- to hexavalent aliphatic hydrocarbon group, a mono- to hexavalent cycloaliphatic hydrocarbon group, a mono- to hexavalent aromatic structure containing hydrocarbon group, optionally comprising one or more heteroatoms selected from the group consisting of a nitrogen atom, an oxygen atom and a sulfur atom, or a mono- to hexavalent heterocyclic hydrocarbon group containing a nitrogen atom, oxygen atom or sulfur atom as the heteroatom,
R1, R2 and R3 denotes a hydrogen atom or a methyl group independently, n means an integer of 0 to 8, m means an integer of 1 to 6, and
the polyfunctional aliphatic mercaptane compound ii) is represented by the following formula (2), 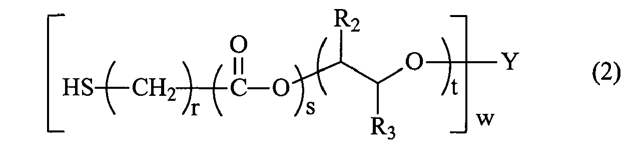 wherein Y denotes a mono- to tetra-valent aliphatic or cycloaliphatic group, R2 and R3 independently denotes a hydrogen atom or a methyl group, r means an integer of 0 to 2, s means an integer of 0 or 1, t means an integer of 0 to 8, w means an integer of 1 to 4, provided that r means 1 or 2 if s=1.

9. A process for producing an acryloyl group containing curable oligomer according to claim 7 or 8, wherein the reaction is carried out in the presence of a primary or secondary amine in an amount of 0.1 to 5 % by weight of the total reaction mixture.
